# EUROPEAN PATENT APPLICATION

(11) **EP 4 668 481 A1**
(43) Date of publication of application: **24.12.2025**
(21) Application number: 23930045.2
(22) Date of filing: 06.12.2023
(51) Int. Cl.: H01Q 1/44

(54) **ELECTRONIC DEVICE**

(30) Priority: 31.03.2023 CN 202310387416
(71) Applicant: Honor Device Co., Ltd., Shenzhen, Guangdong 518040 (CN)
(72) Inventor: CAI, Xiaotao, Shenzhen, Guangdong 518040 (CN); ZHOU, Dawei, Shenzhen, Guangdong 518040 (CN); CHU, Qingxin, Shenzhen, Guangdong 518040 (CN)
(74) Representative: Gill Jennings & Every LLP
(86) International application number: PCT/CN2023/136780
(87) International publication number: WO 2024/198479

(57) **Abstract**

Embodiments of this application provide an electronic device. The electronic device includes a middle frame assembly and a conductor member electrically connected to the middle frame assembly. The middle frame assembly includes a metal middle frame and a border frame. The border frame is located on an outer periphery of the metal middle frame, and at least one border frame antenna is formed on the border frame. The metal middle frame and the conductor member are stacked, and a region on the metal middle frame corresponding to the conductor member and the conductor member define a radiation cavity. At least one feed point is configured to feed the border frame antenna and the radiation cavity. The at least one feed point excites the border frame antenna to generate a radiation current, and excites the radiation cavity to generate a radiation magnetic current, to form a circularly polarized antenna. In this way, the circularly polarized antenna can be implemented in a limited design space. A main polarization beam direction of the circularly polarized antenna is toward a top of an electronic device, so as to achieve a good circular polarization radiation characteristic on the top.

## Description

This application claims priority to Chinese Patent Application No. 202310387416.2, filed with the China National Intellectual Property Administration on March 31, 2023 and entitled "ELECTRONIC DEVICE", which is incorporated herein by reference in its entirety.

### TECHNICAL FIELD

Embodiments of this application relate to the technical field of terminals, and in particular, to an electronic device.

### BACKGROUND

With wide use of a terminal product, the terminal product has increasing functions. In recent years, a satellite communication function appearing in the terminal product has attracted increasingly attention in the market. Terminal satellite communication is an application scenario of a mobile terminal, and may provide stable communication performance without being affected by a ground base station in a scenario such as a first aid and a disaster. Therefore, designing a satellite antenna on a mobile terminal product such as a mobile phone is excessively important. However, because a size of the mobile phone is limited, and a large number of antennas need to be implemented on an existing 5G mobile phone, space for designing the satellite antenna is excessively limited.

In an antenna theory, a circularly polarized antenna may receive any linearly polarized incoming wave, and may also be received by any polarized antenna. A mechanism of the circularly polarized antenna is to generate two linearly polarized waves that have equal amplitudes, are orthogonal, and have a phase difference of 90°. In satellite communication, circular polarization may overcome a problem of polarization mismatch caused by a Faraday rotation effect when the linearly polarized wave passes through an ionosphere. Therefore, the circularly polarized antenna is generally used in the related art. For example, a Tiantong satellite has a polarized feature of a left-handed circular polarization in both a Tx band and a Rx band. Therefore, a ground terminal preferably also has a relatively good left-handed circular polarized feature, to avoid a gain loss of the polarization mismatch.

However, how to design the circularly polarized antenna in the limited space of the terminal product has become a technical problem that needs to be urgently resolved currently.

### SUMMARY

Embodiments of this application provide an electronic device. A circularly polarized antenna can be implemented in a limited design space. A main polarization beam direction of the circularly polarized antenna is toward a top of an electronic device, so as to achieve a good circular polarization radiation characteristic on the top.

Embodiments of this application provide an electronic device, including at least a middle frame assembly and a conductor member electrically connected to the middle frame assembly. The middle frame assembly includes a metal middle frame and a border frame. The border frame is located on an outer periphery of the metal middle frame, and at least one border frame antenna is formed on the border frame. The metal middle frame and the conductor member are stacked, and a region on the metal middle frame corresponding to the conductor member and the conductor member define a radiation cavity.

The electronic device further includes at least one feed point. The at least one feed point is configured to feed the border frame antenna and the radiation cavity, and the at least one feed point excites the border frame antenna to generate and form a radiation current, and excites the radiation cavity to generate and form a radiation magnetic current, to form a circularly polarized antenna.

Embodiments of this application provide an electronic device. In the electronic device, at least one border frame antenna is formed on the border frame of the middle frame assembly. The at least one feed point is configured to feed the border frame antenna, and the border frame antenna can be excited to generate the radiation current. The metal middle frame and the conductor member are stacked, and a region on the metal middle frame corresponding to the conductor member and the conductor member define a radiation cavity. The least one feed point is configured to feed the radiation cavity, and the radiation cavity can be excited to generate the radiation magnetic current, to form the circularly polarized antenna. A current antenna and a magnetic current antenna are designed in the electronic device, so that a design of the circularly polarized antenna whose main polarization beam direction is toward the border frame can be implemented. Therefore, the circularly polarized antenna can be implemented in a limited design space. The main polarization beam direction of the circularly polarized antenna is toward the top of the electronic device, so as to achieve a good circular polarization radiation characteristic on the top.

In a possible implementation, the radiation cavity has at least one opening, and the at least one border frame antenna is located on a side of the radiation cavity having the opening.

In a possible implementation, the at least one feed point includes a first feed point and a second feed point. The first feed point is configured to feed the border frame antenna, and excite the border frame antenna to generate the radiation current, and the second feed point is configured to feed the radiation cavity, and excite the radiation cavity to generate the radiation magnetic current.

In a possible implementation, the second feed point is located between the conductor member and the metal middle frame. The second feed point is electrically connected to the conductor member, or the second feed point is electrically connected to the metal middle frame.

The second feed point is arranged between the conductor member and a metal middle frame assembly, and the second feed point is electrically connected to the conductor member or the metal middle frame, so as to ensure that the second feed point feeds the radiation cavity defined by the metal middle frame and the conductor member.

In a possible implementation, the first feed point is located between the border frame and the metal middle frame. One end of the first feed point is electrically connected to the border frame, and an other end of the first feed point is electrically connected to the metal middle frame.

The first feed point is arranged between the border frame and the metal middle frame. One end of the first feed point is electrically connected to the border frame, and an other end of the first feed point is electrically connected to the metal middle frame. In this way, it can be ensured that the first feed point feeds the border frame antenna formed on the border frame.

In a possible implementation, a first slot is provided on the conductor member, and the first slot is in communication with the at least one opening.

In a possible implementation, the at least one feed point includes a second feed point and a third feed point. The second feed point is configured to feed the radiation cavity, and excite the radiation cavity to generate a radiation magnetic current. The third feed point is located in the first slot. The third feed point excites the conductor member, so that the conductor member is coupled to the border frame antenna, to form the radiation current on the border frame antenna.

The first slot is provided on the conductor member, and the first slot is in communication with the at least one opening in the radiation cavity. When the third feed point is arranged in the first slot, the third feed point excites the conductor member to implement coupling and feed to the border frame antenna, so that the radiation current is formed on the border frame antenna.

In a possible implementation, the third feed point is electrically connected to the first slot in the conductor member.

In a possible implementation, a second slot is provided on the border frame, and the second slot is provided opposite to one of the openings.

In a possible implementation, the at least one feed point includes a first feed point and a fourth feed point. The first feed point is configured to feed the border frame antenna, and excite the border frame antenna to generate the radiation current. The fourth feed point is located in the second slot, and the fourth feed point excites the second slot, so that the second slot is coupled to the radiation cavity, to form the radiation magnetic current in the radiation cavity.

The second slot is provided on the border frame, and the second slot is provided opposite to one of the openings on the radiation cavity. When the fourth feed point is arranged in the second slot, the fourth feed point excites the second slot to implement coupling and feed to the radiation cavity.

In a possible implementation, the fourth feed point is electrically connected to the second slot on the border frame.

In a possible implementation, the conductor member includes a first portion. The first portion and the metal middle frame are opposite to and spaced apart from each other, so that the radiation cavity forms four openings. The at least one border frame antenna is located on a side of at least one of the four openings.

In a possible implementation, the conductor member includes a first portion and a second portion. The first portion is arranged opposite to the metal middle frame, and the second portion is located between the first portion and the metal middle frame. One end of the second portion is electrically connected to the first portion, and an other end of the second portion is electrically connected to the metal middle frame, so that the radiation cavity forms three openings. The at least one border frame antenna is located on a side of at least one of the three openings.

In a possible implementation, one end of the second portion close to the metal middle frame includes a plurality of first ground points. The second portion is electrically connected to the metal middle frame through the first ground point.

One end of the second portion close to the metal middle frame is designed to include a plurality of first ground points, and the second portion of the conductor member is electrically connected to the metal middle frame through the plurality of first ground points, so that contact points for electrical connection between the second portion of the conductor member and the metal middle frame can be added, thereby enhancing connection performance when the second portion of the conductor member is electrically connected to the metal middle frame.

In a possible implementation, the conductor member includes a first portion, a second portion, and a third portion. The first portion is arranged opposite to the metal middle frame, and the second portion and the third portion are located between the first portion and the metal middle frame.

One end of the second portion and one end of the third portion are respectively electrically connected to the first portion, an other end of the second portion and an other end of the third portion are respectively electrically connected to the metal middle frame, and the second portion and the third portion are arranged adjacent or opposite to each other, so that the radiation cavity forms two openings. The at least one border frame antenna is located on a side of at least one of the two openings.

In a possible implementation, one end of the second portion close to the metal middle frame includes a plurality of first ground points. The second portion is electrically connected to the metal middle frame through the first ground point. One end of the third portion close to the metal middle frame includes a plurality of second ground points. The third portion is electrically connected to the metal middle frame through the second ground point.

One end of the second portion close to the metal middle frame is designed to include a plurality of first ground points, and the second portion of the conductor member is electrically connected to the metal middle frame through the plurality of first ground points, so that contact points for electrical connection between the second portion of the conductor member and the metal middle frame can be added, thereby enhancing connection performance when the second portion of the conductor member is electrically connected to the metal middle frame.

One end of the third portion close to the metal middle frame is designed to include a plurality of second ground points, and the third portion of the conductor member is electrically connected to the metal middle frame through the plurality of second ground points, so that contact points for electrical connection between the third portion of the conductor member and the metal middle frame can be added, thereby enhancing connection performance when the third portion of the conductor member is electrically connected to the metal middle frame.

In a possible implementation, the conductor member includes a first portion, a second portion, a third portion, and a fourth portion. The first portion is arranged opposite to the metal middle frame, and the second portion, the third portion, and the fourth portion are located between the first portion and the metal middle frame.

One end of the second portion, one end of the third portion, and one end of the fourth portion are respectively electrically connected to the first portion, an other end of the second portion, an other end of the third portion, and an other end of the fourth portion are respectively electrically connected to the metal middle frame, the third portion is arranged adjacent to each of the second portion and the fourth portion, and the second portion is arranged opposite to the fourth portion, so that the radiation cavity forms one of the openings. The at least one border frame antenna is located on a side of the opening.

In a possible implementation, one end of the second portion close to the metal middle frame includes a plurality of first ground points. The second portion is electrically connected to the metal middle frame through the first ground point. One end of the third portion close to the metal middle frame includes a plurality of second ground points. The third portion is electrically connected to the metal middle frame through the second ground point. One end of the fourth portion close to the metal middle frame includes a plurality of third ground points. The fourth portion is electrically connected to the metal middle frame through the third ground point.

One end of the second portion close to the metal middle frame is designed to include a plurality of first ground points, and the second portion of the conductor member is electrically connected to the metal middle frame through the plurality of first ground points, so that contact points for electrical connection between the second portion of the conductor member and the metal middle frame can be added, thereby enhancing connection performance when the second portion of the conductor member is electrically connected to the metal middle frame.

One end of the third portion close to the metal middle frame is designed to include a plurality of second ground points, and the third portion of the conductor member is electrically connected to the metal middle frame through the plurality of second ground points, so that contact points for electrical connection between the third portion of the conductor member and the metal middle frame can be added, thereby enhancing connection performance when the third portion of the conductor member is electrically connected to the metal middle frame.

One end of the fourth portion close to the metal middle frame is designed to include a plurality of third ground points, and the fourth portion of the conductor member is electrically connected to the metal middle frame through the plurality of third ground points, so that contact points for electrical connection between the fourth portion of the conductor member and the metal middle frame can be added, thereby enhancing connection performance when the fourth portion of the conductor member is electrically connected to the metal middle frame.

In a possible implementation, an insulation material is arranged in the radiation cavity. The insulation material is arranged in the radiation cavity, which helps form the radiation magnetic current in the radiation cavity, thereby avoiding implementing electric communication between two opposite sides in the radiation cavity, and avoiding affecting radiation performance of the antenna.

### BRIEF DESCRIPTION OF DRAWINGS

FIG. 1 is a schematic structural diagram of an electronic device according to an embodiment of this application;
FIG. 2 is an exploded view of FIG. 1;
FIG. 3 is a schematic structural diagram of a conductor member and a middle frame assembly in an electronic device according to an embodiment of this application;
FIG. 4 is a schematic structural diagram of a conductor member and a middle frame assembly in an electronic device according to an embodiment of this application;
FIG. 5 is a schematic structural diagram of a border frame in an electronic device according to an embodiment of this application;
FIG. 6 is a schematic structural diagram of a conductor member and a middle frame assembly in an electronic device according to an embodiment of this application;
FIG. 7 is a graph of a reflection coefficient and a graph of radiation efficiency of a circularly polarized antenna in an electronic device according to an embodiment of this application;
FIG. 8 is a diagram of a radiation direction of a circularly polarized antenna in an electronic device at 2.02 GHz according to an embodiment of this application;
FIG. 9 is a diagram of a general direction of a circularly polarized antenna in an electronic device at 2.02 GHz according to an embodiment of this application;
FIG. 10 is a diagram of a direction of a left-handed circular polarization of a circularly polarized antenna in an electronic device at 2.02 GHz according to an embodiment of this application;
FIG. 11 is a graph of an antenna axial ratio of a circularly polarized antenna in an electronic device according to an embodiment of this application;
FIG. 12 is a schematic structural diagram of a conductor member and a middle frame assembly in an electronic device according to an embodiment of this application;
FIG. 13 is a schematic structural diagram of a conductor member and a middle frame assembly in an electronic device according to an embodiment of this application;
FIG. 14 is a diagram of a general direction of a circularly polarized antenna in an electronic device at 2.02 GHz according to an embodiment of this application;
FIG. 15 is a diagram of a direction of a left-handed circular polarization of a circularly polarized antenna in an electronic device at 2.02 GHz according to an embodiment of this application;
FIG. 16 is a graph of an antenna axial ratio of a circularly polarized antenna in an electronic device according to an embodiment of this application;
FIG. 17 is a schematic structural diagram of a conductor member and a middle frame assembly in an electronic device according to an embodiment of this application;
FIG. 18 is a schematic structural diagram of a conductor member and a middle frame assembly in an electronic device according to an embodiment of this application;
FIG. 19 is a schematic structural diagram of a conductor member and a middle frame assembly in an electronic device according to an embodiment of this application;
FIG. 20 is a schematic structural diagram of a conductor member and a middle frame assembly in an electronic device according to an embodiment of this application; and
FIG. 21 is a schematic structural diagram of a conductor member and a middle frame assembly in an electronic device according to an embodiment of this application.

### DESCRIPTION OF REFERENCE NUMERALS:

200-Mobile phone; 210-Display; 211-First hole;
220-Middle frame assembly; 221-Metal middle frame; 222-Border frame;
222a-Border frame antenna; 2221-Top border frame; 2222-Bottom border frame;
2223-Left border frame; 2224-Right border frame; 230-Circuit board;
240-Battery; 250-Battery cover; 251-Second hole;
260-Front camera module; 270-Rear camera module; 100-Conductor member;
100a-Radiation cavity; 1001-Opening; 100b-First feed point;
100c-Second feed point; 100d-Third feed point; 100e-Fourth feed point;
110-First portion; 120-Second portion; 130-Third portion;
140-Fourth portion; 150-Insulation material; 160-First slot;
170-Second slot; A1-Radiation current; A2-Radiation magnetic current;
E-Electric field direction.

### DESCRIPTION OF EMBODIMENTS

Terms used in implementations of this application are only used for explaining specific embodiments of this application, and are not intended to limit this application. The implementations of embodiments of this application are described in detail below with reference to the accompanying drawings.

An embodiment of this application provides an electronic device, which may include, but is not limited to, a mobile phone, a tablet computer, a notebook computer, an ultra-mobile personal computer (ultra-mobile personal computer, UMPC), a hand-held computer, an intercom, a netbook, a point of sales (Point of sales, POS) machine, a personal digital assistant (personal digital assistant, PDA), a wearable device, a virtual reality device, a wireless USB flash disk, a Bluetooth speaker/headphone, or a mobile or fixed terminal having an antenna such as an on-board front-mounted device, a driving recorder, or a security device.

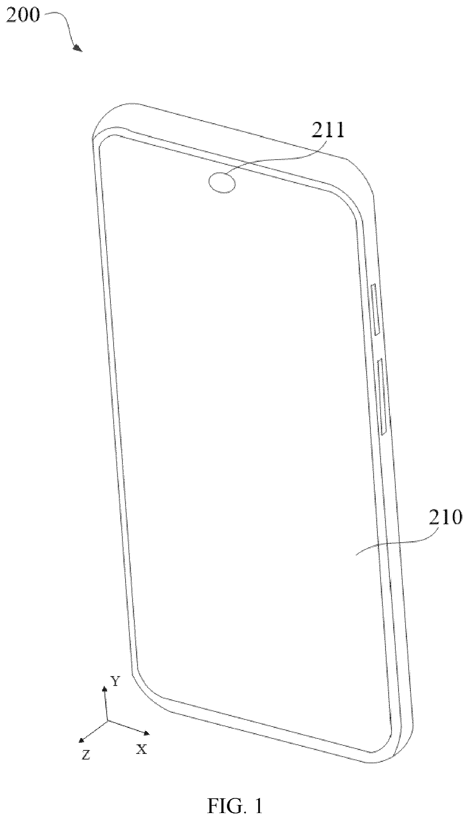

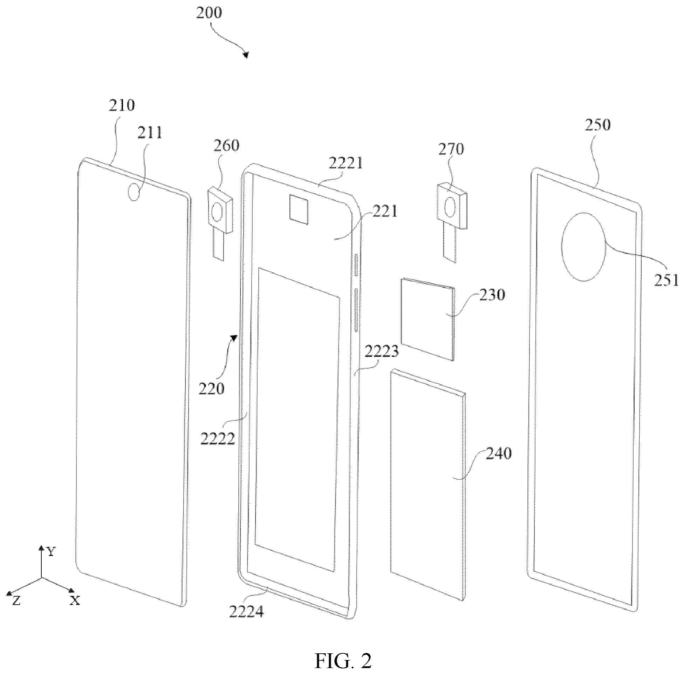

Referring to FIG. 1 and FIG. 2, in this embodiment of this application, a description is provided by using an example in which a mobile phone 200 is the foregoing electronic device. The mobile phone 200 provided in this embodiment of this application may be a mobile phone having a curved screen or a mobile phone having a flat screen, and may be a mobile phone having a straight panel or a mobile phone having a foldable screen. In this embodiment of this application, a mobile phone 200 having a curved screen is used as an example for description.

FIG. 1 and FIG. 2 respectively show an overall structure and an exploded structure of a mobile phone 200 having a straight panel. A display 210 of the mobile phone 200 provided in this embodiment of this application may be a water drop screen, a notch screen, a full screen, or a hole-digging screen (referring to FIG. 1). For example, a first hole 211 is provided on the display 210, and the hole-digging screen is used as an example for description below.

Referring to FIG. 2, the mobile phone 200 may include a display 210, a middle frame assembly 220, a battery cover 250, and a battery 240 located between the middle frame assembly 220 and the battery cover 250. The battery 240 may be arranged on a side of the middle frame assembly 220 facing the battery cover 250 (as shown in FIG. 2), or the battery 240 may be arranged on a side of the middle frame assembly 220 facing the display 210. For example, the side of the middle frame assembly 220 facing the battery cover 250 may have a battery compartment (not shown in the figure), and the battery 240 is mounted to the battery compartment.

In some other examples, the mobile phone 200 may further include a circuit board 230. The circuit board 230 may be arranged on the middle frame assembly 220. For example, the circuit board 230 may be arranged on a side of the middle frame assembly 220 facing the battery cover 250 (as shown in FIG. 2), or the circuit board 230 may be arranged on a side of the middle frame assembly 220 facing the display 210. The display 210 and the battery cover 250 are respectively located on two sides of the middle frame assembly 220.

The battery 240 may be connected to a charging management module and the circuit board 230 through a power management module. The power management module receives an input of the battery 240 and/or the charging management module, and supplies power to a processor, an internal memory, an external memory, the display 210, a camera module (such as a front camera module 260 and a rear camera module 270 in FIG. 2), a communication module, and the like. The power management module may further be configured to monitor parameters such as a battery capacity, a quantity of battery cycles, and a battery health state (power leakage and impedance). In some other embodiments, the power management module may alternatively be arranged in the processor of the circuit board 230. In some other embodiments, the power management module and the charging management module may be arranged in a same device.

When the mobile phone 200 is the mobile phone 200 having a flat screen, the display 210 may be an organic light-emitting diode (Organic Light-Emitting Diode, OLED) display, or may be a liquid crystal display (Liquid Crystal Display, LCD). When the mobile phone 200 is the mobile phone 200 having a curved screen, the display 210 may be the OLED display.

Still referring to FIG. 2, the middle frame assembly 220 may include a metal middle frame 221 and a border frame 222. The border frame 222 is arranged around an outer periphery of the metal middle frame 221. Generally, the border frame 222 may include a top border frame 2221, a bottom border frame 2222, a left border frame 2223, and a right border frame 2224. The top border frame 2221, the bottom border frame 2222, the left border frame 2223, and the right border frame 2224 define a border frame 222 having a square ring structure. A material of the metal middle frame 221 includes, but is not limited to, an aluminum plate, aluminum alloy, stainless steel, a steel-aluminum composite die-casting plate, titanium alloy, magnesium alloy, or the like. The border frame 222 may be a metal border frame, a ceramic border frame, or a glass border frame. When the border frame 222 is the metal border frame, a material of the metal border frame includes, but is not limited to, aluminum alloy, stainless steel, a steel-aluminum composite die-casting plate, titanium alloy, or the like. The metal middle frame 221 and the border frame 222 may be snap-fitted, welded, bonded, or integrally formed, or the metal middle frame 221 may be fixed and connected to the border frame 222 by injection molding.

Referring to FIG. 2, the top border frame 2221 and the bottom border frame 2222 are arranged opposite to each other, and the left border frame 2223 and the right border frame 2224 are arranged opposite to each other. The top border frame 2221 is respectively connected to one end of the left border frame 2223 and one end of the right border frame 2224 by round corners, and the bottom border frame 2222 is respectively connected to an other end of the left border frame 2223 and an other end of the right border frame 2224 by round corners, to jointly form a round-cornered rectangular region. A ground plane of the battery cover is arranged in the round-cornered rectangular region and is respectively connected to the top border frame 2221, the bottom border frame 2222, the left border frame 2223, and the right border frame 2224. It may be understood that the ground plane of the battery cover may be the battery cover 250 of the mobile phone 200.

The battery cover 250 may be a metal battery cover, a glass battery cover, a plastic battery cover, or a ceramic battery cover. In this embodiment of this application, a material of the battery cover 250 is not limited, and is not limited to the foregoing examples either.

It should be noted that in some examples, the battery cover 250 of the mobile phone 200 may be connected to the border frame 222 to form a unibody (Unibody) battery cover. For example, the mobile phone 200 may include the display 210, the metal middle frame 221, and the battery cover. The battery cover may be a unibody (Unibody) battery cover formed by the border frame 222 and the battery cover 250. In this way, the circuit board 230 and the battery 240 are located in a space defined by the metal middle frame 221 and the battery cover.

In a possible implementation, a second hole 251 is provided on the battery cover 250, to serve as a light-transmitting region of the rear camera module 270. Similarly, the first hole 211 on the display 210 may also be used as a light-transmitting region of the front camera module 260.

It should be understood that in this embodiment of this application, as shown in FIG. 1 and FIG. 2, a width direction of the electronic device is an x direction, a length direction of the electronic device is a y direction, and a thickness direction of the electronic device is a z direction. A length, a width, and a thickness in embodiments of this application are merely for ease of description, and do not mean any limitation to the size. For example, the length may be greater than, equal to, or less than the width.

To implement a communication function of the electronic device, an antenna is arranged on the electronic device, so as to transmit and receive a signal through the antenna. An antenna performance level of the electronic device in an actual use scenario is directly related to actual experience of a user. Currently, most electronic devices apply an industrial design (Industry Design, ID) of the metal border frame and the glass battery cover.

For example, the electronic device is the mobile phone 200. Generally, different antenna structures are designed at different spatial positions on the mobile phone 200. Specifically, different resonance antennas may be deployed at different positions in space of the mobile phone 200 based on requirements of actual scenarios, to satisfy antenna requirements in different scenarios. In the related art, when the antenna is arranged in the mobile phone 200, the antenna is mainly arranged on the battery cover or the middle frame assembly of the mobile phone 200, for example, the electronic device of the metal border frame or a glass battery cover ID. A conventional design solution of the antenna is generally to provide a gap on the metal border frame to form a plurality of antennas. A feed point is arranged on the circuit board of the mobile phone 200, and the feed point is electrically connected to the antenna, so as to feed the antenna.

In recent years, a satellite communication function appearing in the terminal product has attracted increasingly attention in the market. Terminal satellite communication is an application scenario of a mobile terminal, and may provide stable communication performance without being affected by a ground base station in a scenario such as a first aid and a disaster. Therefore, designing a satellite antenna on a mobile terminal product such as a mobile phone is excessively important. However, because a size of the mobile phone is limited, and a large number of antennas need to be implemented on an existing 5G mobile phone, space for designing the satellite antenna is excessively limited.

Because signal propagation seriously degrades in a severe environment, compared with a linearly polarized wave, a circularly polarized wave has a good advantage in the signal propagation, and may overcome multi-path interference and a polarization mismatch. A circularly polarized antenna may receive any polarized incoming wave, and may also be received by any polarized antenna. Therefore, the circularly polarized antenna is widely applied to fields such as a global positioning system (Global Positioning System, GPS) and a radio frequency identification (Radio Frequency Identification, RFID). A mechanism of the circularly polarized antenna is to generate two linearly polarized waves that have equal amplitudes, are orthogonal, and have a phase difference of 90° (namely, two current resonance modes that have equal amplitudes, are orthogonal, and have a phase difference of 90°).

However, how to design the circularly polarized antenna in the limited space of the terminal product has become a technical problem that needs to be urgently resolved currently.

In the related art, the circularly polarized antenna is usually designed on the battery cover of the mobile phone. The circularly polarized antenna satisfies requirements of equal amplitude orthogonal excitation and a phase difference of 90 degrees. However, a main polarized maximum beam direction of the circularly polarized antenna is toward the battery cover. In an actual application scenario, if the user needs a circularly polarized antenna with relatively good vertical grip performance, a circular polarization and a main beam direction should be vertical to the sky. Apparently, a pattern of the circularly polarized antenna is toward the battery cover, and cannot satisfy an actual requirement.

Alternatively, in the related art, a helix antenna or a four-arm helix antenna may be generally used to implement the circular polarization and the main beam direction being vertical to the sky. However, this antenna is generally external. Considering a size limitation factor, no extra space is left to arrange the helix antenna in a terminal mobile phone with relatively limited space.

Based on the above, an embodiment of this application provides a new electronic device for resolving the foregoing technical problems. In the electronic device, a middle frame assembly is electrically connected to a conductor member. The middle frame assembly includes a metal middle frame and a border frame. The border frame is located on an outer periphery of the metal middle frame, and at least one border frame antenna is formed on the border frame. The metal middle frame and the conductor member are stacked, and a region on the metal middle frame corresponding to the conductor member and the conductor member define a radiation cavity. At least one feed point is configured to feed the border frame antenna and the radiation cavity. The at least one feed point excites the border frame antenna to generate a radiation current, and excites the radiation cavity to generate a radiation magnetic current, to form a circularly polarized antenna. In this way, the circularly polarized antenna can be implemented in a limited design space. A main polarization beam direction of the circularly polarized antenna is toward a top of an electronic device, so as to achieve a good circular polarization radiation characteristic on the top, thereby ensuring a use effect of the user.

It should be noted that the electronic device provided in this application is applicable to use any one or more of the following communication technologies, for example, a long term evolution (long term evolution, LTE) communication technology, a Wi-Fi communication technology, a 5G communication technology, a SUB-6G communication technology, a multi-in multi-out (Multi-in Multi-out, MIMO) communication technology, and another future communication technology. The MIMO communication technology refers to an antenna system in which a plurality of antennas are used at both a sending terminal and a receiving terminal, and a plurality of channels are formed between the sending terminal and the receiving terminal, and have extremely high spectrum utilization efficiency.

A specific structure of the electronic device is described in detail below with reference to specific accompanying drawings (requirements of a communication network are not highlighted in the following embodiments, and an operating characteristic of an antenna in the electronic device is only described in terms of a frequency).

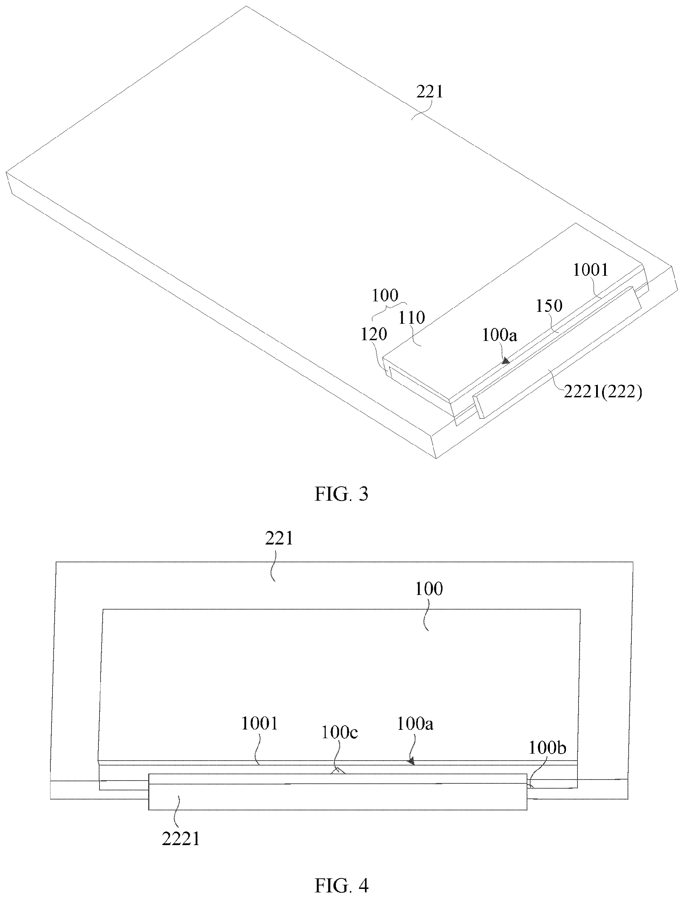

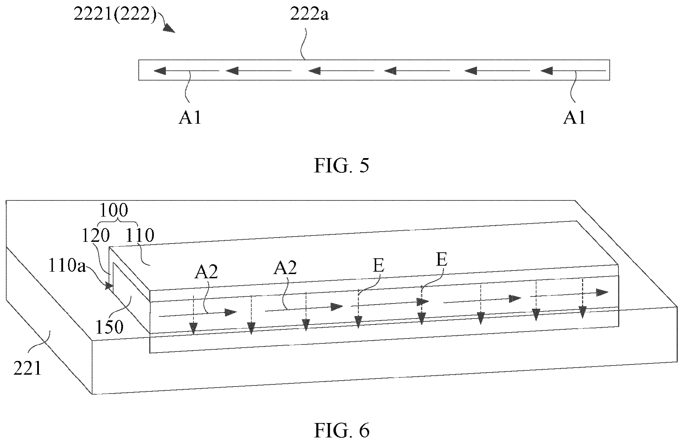

An embodiment of this application provides an electronic device. The electronic device may be the mobile phone 200, the tablet computer, or the like. Specifically, as shown in FIG. 3 and FIG. 4, the electronic device may at least include a middle frame assembly 220 and a conductor member 100 electrically connected to the middle frame assembly 220. The middle frame assembly 220 may include a metal middle frame 221 and a border frame 222. The border frame 222 is located on an outer periphery of the metal middle frame 221, and at least one border frame antenna 222a (referring to FIG. 5) is formed on the border frame 222.

In other words, the border frame antenna 222a is a slot antenna formed after a gap is provided on the border frame 222. For example, the slot antenna may include a first segment, a second segment, and a third segment that are separated through the gap. A non-conductive material may be filled between the first segment and the second segment, between the second segment and the third segment, and between the third segment and the first segment.

During actual application, a position of the gap may be changed based on requirements, and each gap may be filled with the non-conductive material (such as plastic), to ensure appearance integrity of the border frame 222. A provided position of the gap on the border frame 222 is flexibly set, so that radiation performance of the antenna can be ensured, and appearance design of different requirements can be implemented, which helps improve product quality of the electronic device.

In this embodiment of this application, the metal middle frame 221 and the conductor member 100 may be stacked. In addition, a region on the metal middle frame 221 corresponding to the conductor member 100 and the conductor member 100 define a radiation cavity 100a.

It should be noted that the radiation cavity 100a may be independently constructed, or may be implemented through an existing conductor member such as a steel sheet or a camera component in the electronic device. Specific results and materials of the conductor member 100 are not limited in this embodiment of this application, and are not limited to the foregoing examples.

The electronic device may further include at least one feed point. The at least one feed point may be configured to feed the border frame antenna 222a and the radiation cavity 100a, and the at least one feed point excites the border frame antenna 222a to generate and form a radiation current, and excites the radiation cavity 100a to generate and form a radiation magnetic current, to form a circularly polarized antenna.

As shown in FIG. 4, the at least one feed point may include a first feed point 100b and a second feed point 100c. The first feed point 100b is configured to feed the border frame antenna 222a, and excite the border frame antenna 222a to form a radiation current A1, and the second feed point 100c is configured to feed the radiation cavity 100a, and excite the radiation cavity 100a to form a radiation magnetic current A2 (referring to FIG. 6). In an actual application scenario, amplitude and phase of the first feed point and the second feed point are controlled through power distribution of a signal source power, so as to form circular polarization.

With reference to FIG. 5 and FIG. 6, the border frame antenna 222a on the border frame 222 forms current radiation, and the radiation cavity 100a is constructed to form magnetic current radiation. A current antenna and a magnetic current antenna each have a relatively low height, so that the current antenna and the magnetic current antenna can be conveniently implemented in the electronic device through landing. A circularly polarized antenna can be implemented by separately exciting a current and a magnetic current and controlling a phase difference. Specifically, the border frame antenna 222a and the cavity antenna have equal excitation amplitudes, and a phase difference requirement is satisfied, so as to form the circularly polarized antenna.

In the electronic device, the at least one border frame antenna 222a is formed on the border frame 222 of the middle frame assembly 220. The first feed point 100b is configured to feed the border frame antenna 222a, so that the radiation current A1 can be formed on the border frame antenna 222a. The metal middle frame 221 and the conductor member 100 are stacked, and a region on the metal middle frame 221 corresponding to the conductor member 100 and the conductor member 100 jointly define a radiation cavity 100a. The second feed point 100c is configured to feed the radiation cavity 100a, so that the radiation magnetic current A2 can be formed in the radiation cavity 100a. A direction of an electric field E is shown by a dashed line in FIG. 6.

In addition, the radiation current A1 and the radiation magnetic current A2 satisfy the phase difference requirement, and a typical value of the phase difference between the radiation current A1 and the radiation magnetic current A2 is 90 degrees. In other words, the current antenna and the magnetic current antenna are designed in the electronic device, specifically, the current antenna and the magnetic current antenna are respectively formed through the border frame 222 of the electronic device and the radiation cavity 100a constructed therein, so that a design characteristic of the circularly polarized antenna whose main polarization beam direction is toward the border frame 222 can be implemented.

Therefore, the circularly polarized antenna can be implemented in a limited design space. The main polarization beam direction of the circularly polarized antenna is toward the top of the electronic device, so as to achieve a good circular polarization radiation characteristic on the top.

It should be additionally noted that the radiation current A1 in the circularly polarized antenna may be formed by a part of the border frame, or may be formed by a plurality of parts of the border frame. This is not limited in this embodiment of this application.

It may be understood that as shown in FIG. 3 and FIG. 4, in this embodiment of this application, the radiation cavity 100a has at least one opening 1001, and the at least one border frame antenna 222a may be located on a side of the radiation cavity 100a having the opening 1001. The radiation cavity 100a has at least one opening 1001 that can ensure input and output of a radiation signal.

In this embodiment of this application, an insulation material 150 may be arranged in the radiation cavity 100a. The insulation material 150 may be a dielectric material, a foam, air, or the like. The insulation material 150 is arranged in the radiation cavity 100a, which helps form the radiation magnetic current A2 in the radiation cavity 100a, thereby avoiding implementing electric communication between two opposite sides in the radiation cavity 100a, and avoiding affecting radiation performance of the antenna.

It should be noted that as shown in FIG. 4, in this embodiment of this application, the second feed point 100c may be located between the conductor member 100 and the middle frame assembly 220. Specifically, the second feed point 100c is electrically connected to the conductor member 100, or the second feed point 100c is electrically connected to the metal middle frame 221.

The second feed point 100c is arranged between the conductor member 100 and the middle frame assembly 220, and the second feed point 100c is electrically connected to the conductor member 100 or the metal middle frame 221, so as to ensure that the second feed point 100c feeds the radiation cavity 100a defined by the metal middle frame 221 and the conductor member 100.

Certainly, in some embodiments, the second feed point 100c may be arranged at a position selected between the conductor member 100 and the middle frame assembly 220. The second feed point 100c excites the radiation cavity 100a, to form the magnetic current antenna. In addition, the second feed point 100c also generates a current on the conductor member 100. This is equivalent to that the second feed point 100c also excites the conductor member 100. Then, the current on the conductor member 100 is indirectly coupled to the border frame 222 to form the current antenna, so as to form the circularly polarized antenna.

It should be noted that in this embodiment of this application, one or more first feed points 100b are arranged. When one first feed point 100b is arranged, feed of the first feed point 100b to the border frame antenna 222a is a single feed. When a plurality of first feed points 100b are arranged, feed of the plurality of first feed points 100b to the border frame antenna 222a is a common feed.

One or more second feed points 100c are arranged. When one second feed point 100c is arranged, feed of the second feed point 100c to the radiation cavity 100a is a single feed. When a plurality of second feed points 100c are provided, feed of the plurality of second feed points 100c to the radiation cavity 100a is a common feed.

In this embodiment of this application, the first feed point 100b may be located between the border frame 222 and the metal middle frame 221. One end of the first feed point 100b is electrically connected to the border frame 222, and an other end of the first feed point 100b is electrically connected to the metal middle frame 221.

The first feed point 100b is arranged between the border frame 222 and the metal middle frame 221. One end of the first feed point 100b is electrically connected to the border frame 222, and an other end of the first feed point 100b is electrically connected to the metal middle frame 221. In this way, it can be ensured that the first feed point 100b feeds the border frame antenna 222a formed on the border frame 222.

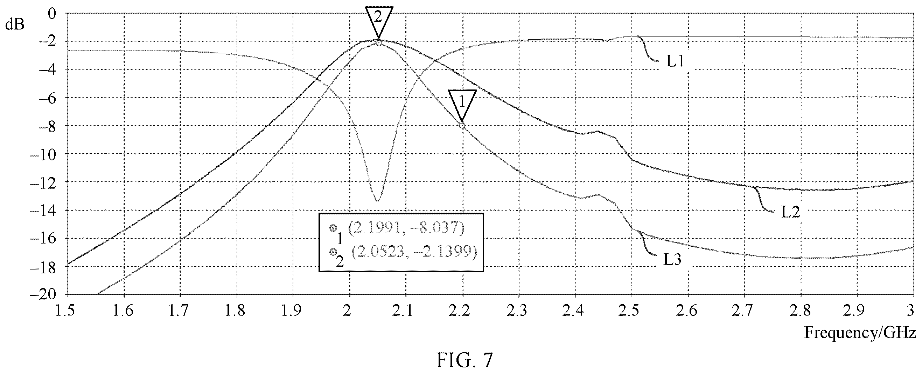

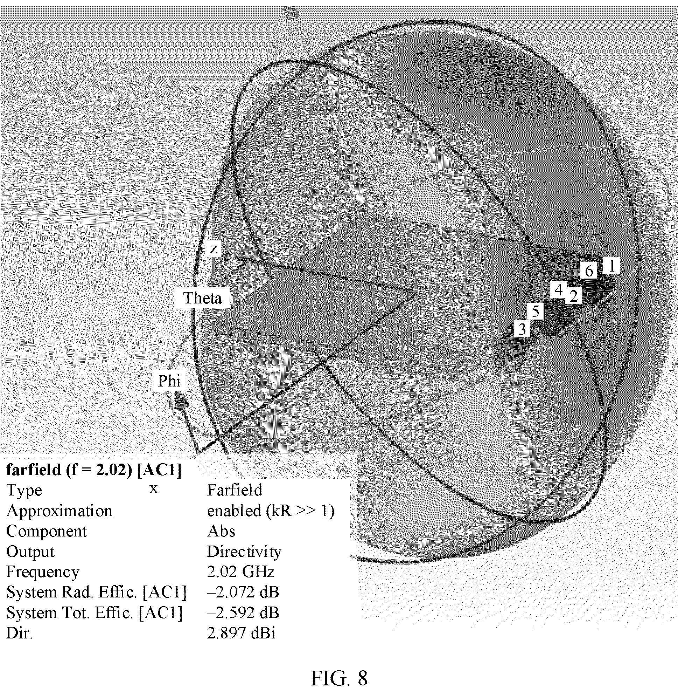

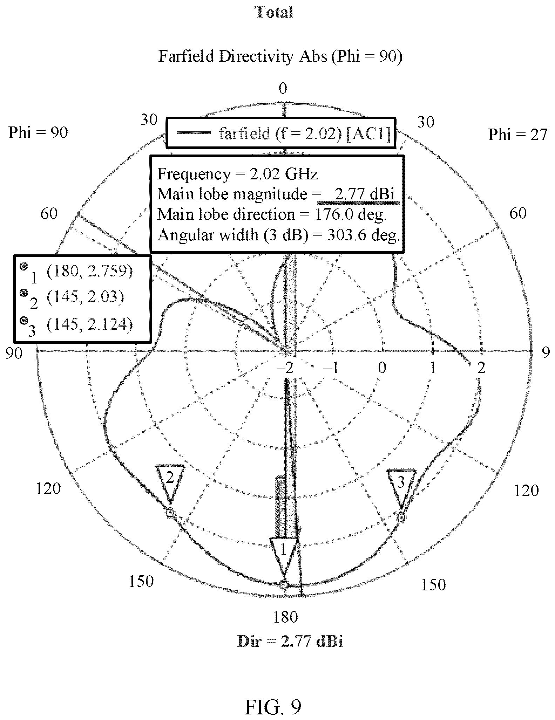

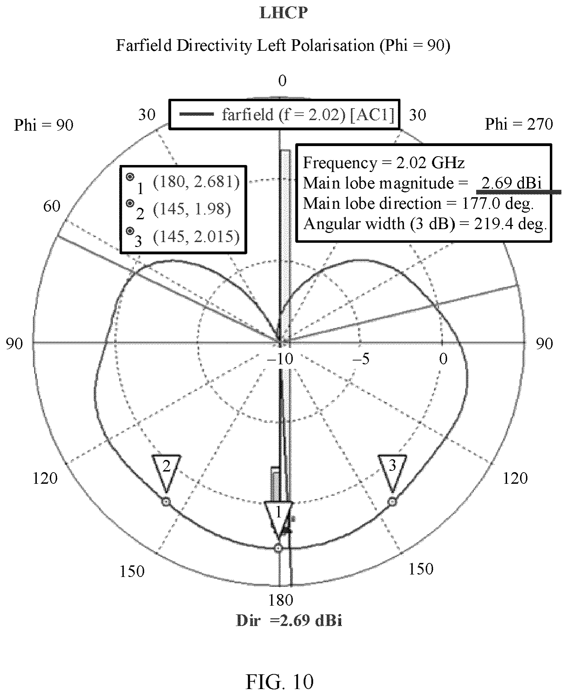

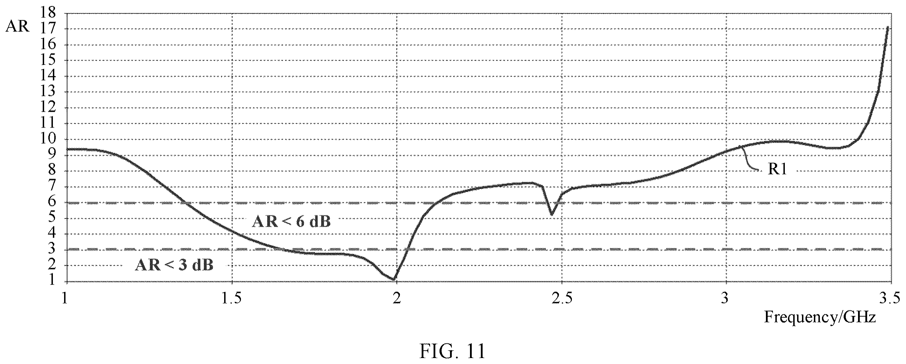

FIG. 7 is a graph of a reflection coefficient and a graph of radiation efficiency of a circularly polarized antenna in an electronic device according to an embodiment of this application. L1 is a graph of a reflection coefficient of a circularly polarized antenna according to an embodiment of this application, L2 is a graph of a radiation efficiency of a circularly polarized antenna according to an embodiment of this application, and L3 is a graph of an overall efficiency of a circularly polarized antenna according to an embodiment of this application. FIG. 8 is a diagram of a radiation direction of a circularly polarized antenna in an electronic device at 2.02 GHz according to an embodiment of this application. FIG. 9 is a diagram of a general direction of a circularly polarized antenna at 2.02 GHz in an electronic device according to an embodiment of this application, a directivity coefficient being 2.77 dBi. FIG. 10 is a diagram of a direction of a left-handed circular polarization of a circularly polarized antenna at 2.02 GHz in an electronic device according to an embodiment of this application, a directivity coefficient being 2.69 Bi. R1 in FIG. 11 is a graph of an antenna axial ratio of a circularly polarized antenna in a top direction in an electronic device according to an embodiment of this application.

It may be obviously seen from FIG. 7 to FIG. 11 that in embodiments of this application, the antenna design in the electronic device has a relatively good circularly polarized characteristic, and the circularly polarized antenna design has a relatively good circular polarization radiation characteristic on the top. Therefore, in embodiments of this application, in a limited space of the electronic device, namely, in a relatively low height and a relatively small size, a circularly polarized antenna design in which a main polarized radiation direction is toward the top is implemented.

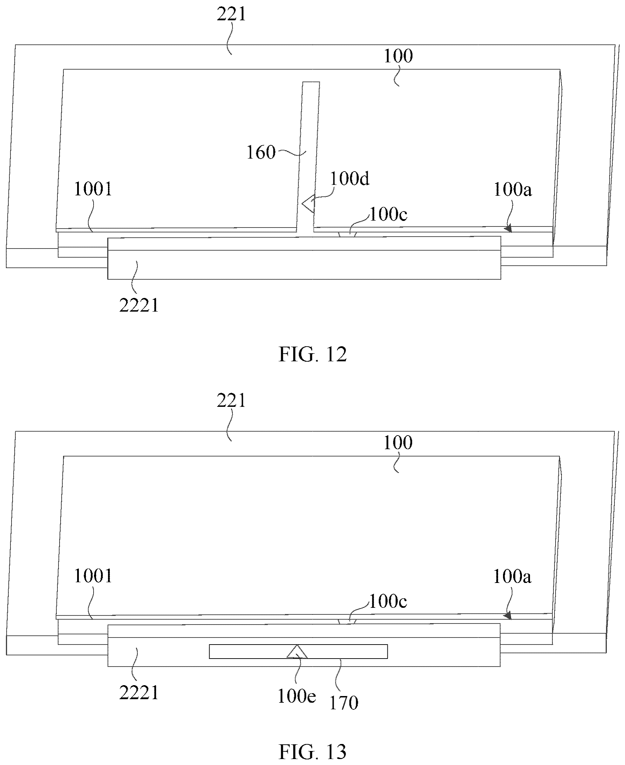

In addition, referring to FIG. 12, in some other embodiments, a first slot 160 may be provided on the conductor member 100. The first slot 160 is in communication with the at least one opening 1001. In this case, the at least one feed point may include a second feed point 100c and a third feed point 100d. The second feed point 100c is configured to feed the radiation cavity 100a, and excite the radiation cavity 100a to form a radiation magnetic current.

The third feed point 100d is located in the first slot 160. The third feed point 100d excites the conductor member 100, so that the conductor member 100 is coupled to the border frame antenna 222a, to form a radiation current on the border frame antenna 222a. The first slot 160 is provided on the conductor member 100, and the first slot 160 is in communication with the at least one opening 1001 in the radiation cavity 100a. When the third feed point 100d is arranged in the first slot 160, the third feed point 100d excites the conductor member 100 to implement coupling and feed to the border frame antenna 222a, so that the radiation current is formed on the border frame antenna 222a.

In a possible implementation, the third feed point 100d may be electrically connected to the conductor member 100. Specifically, the third feed point 100d may be electrically connected to an inner edge of the first slot 160 in the conductor member 100.

In this case, an excitation source of a current and an excitation source of a magnetic current are both arranged on the cavity antenna. The first slot 160 is provided on a conductor wall (namely, the conductor member 100) of the cavity antenna, and the excitation source (namely, the third feed point 100d) is arranged in the first slot 160, so that design of the circularly polarized antenna of the current and the magnetic current can also be implemented.

In this embodiment of this application, a feed manner for the circularly polarized antenna may be feeding the cavity antenna, or may be feeding the border frame antenna 222a, or may be direct feeding, or may be coupled feeding. This is not limited in this embodiment of this application.

It may be understood that in this embodiment of this application, an extension direction of the opening 1001 that is in communication with the first slot 160 may be perpendicular to the extension direction of the first slot 160.

It should be noted that in this embodiment of this application, one or more third feed points 100d are arranged. When one third feed point 100d is arranged, feed of the third feed point 100d to the border frame antenna 222a and the radiation cavity 100a is a single feed. When a plurality of third feed points 100d are arranged, feed of the plurality of third feed point 100d to the border frame antenna 222a and the radiation cavity 100a is a common feed.

Alternatively, in some embodiments, referring to FIG. 13, a second slot 170 may be provided on the border frame 222, and the second slot 170 is arranged opposite to one of the opening 1001. In this case, the at least one feed point may include the first feed point 100b and a fourth feed point 100e. The first feed point 100b is configured to feed the border frame antenna 222a, and excite the border frame antenna 222a to form the radiation current.

The fourth feed point 100e is located in the second slot 170. The fourth feed point 100e excites the second slot 170, so that the second slot 170 is coupled to the radiation cavity 100a, to form the radiation magnetic current in the radiation cavity 100a. The second slot 170 is provided on the border frame 222, and the second slot 170 is provided opposite to one of the opening 1001 on the radiation cavity 100a. When the fourth feed point 100e is arranged in the second slot 170, the fourth feed point 100e excites the second slot 170 to implement coupling and feed to the radiation cavity 100a.

In a possible implementation, the fourth feed point 100e may be electrically connected to the border frame 222. Specifically, the fourth feed point 100e may be electrically connected to an inner edge of the second slot 170 on the border frame 222.

In this case, the excitation source of the current and the excitation source of the magnetic current are both arranged on the border frame antenna 222a. The second slot 170 is provided on the border frame 222, and the excitation source (namely, the fourth feed point 100e) is arranged in the second slot 170, so that the design of the circularly polarized antenna of the current and the magnetic current can also be implemented.

It should be noted that in this embodiment of this application, one or more fourth feed points 100e are arranged. When one fourth feed point 100e is arranged, feed of the fourth feed point 100e to the border frame antenna 222a and the radiation cavity 100a is a single feed. When a plurality of fourth feed points 100e are arranged, feed of the plurality of fourth feed point 100e to the border frame antenna 222a and the radiation cavity 100a is a common feed.

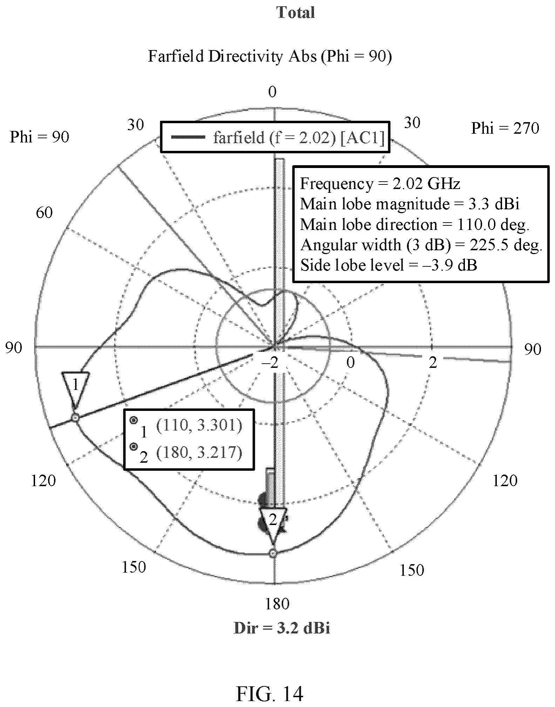

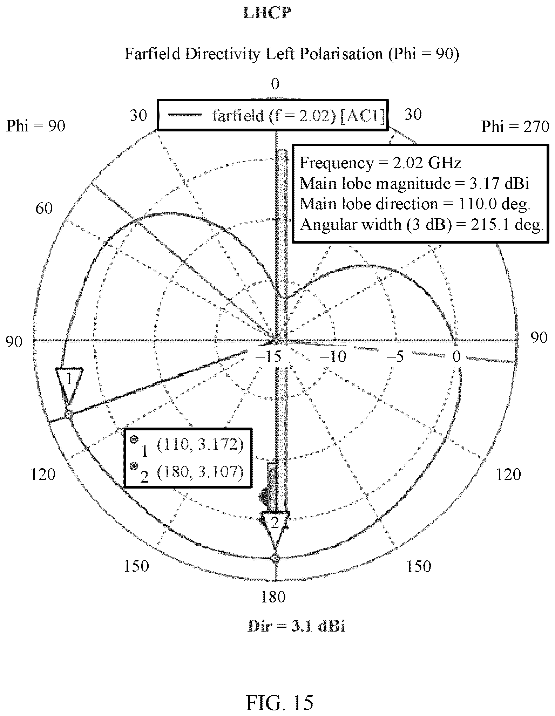

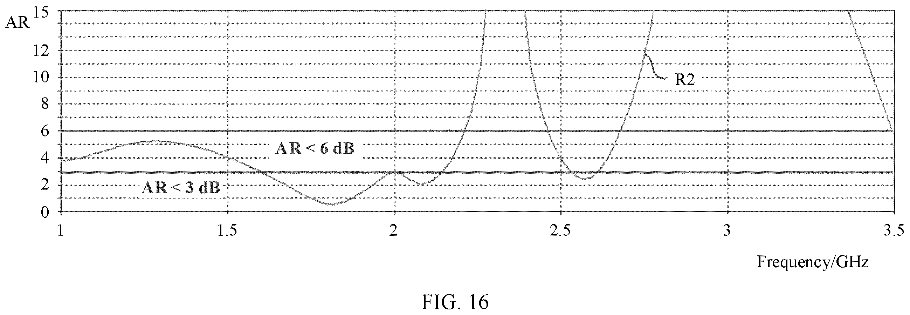

FIG. 14 is a diagram of a general direction of a circularly polarized antenna in an electronic device at 2.02 GHz according to an embodiment of this application, a directivity coefficient being 3.2 dBi. FIG. 15 is a diagram of a direction of a left-handed circular polarization of a circularly polarized antenna in an electronic device at 2.02 GHz according to an embodiment of this application, a directivity coefficient being 3.1 dBi. R2 in FIG. 16 is a graph of an antenna axial ratio of a circularly polarized antenna in a top direction in an electronic device according to an embodiment of this application. It may be obviously seen from FIG. 14 to FIG. 16 that in the structure shown in FIG. 12, the antenna in the electronic device also has a relatively good circular polarization radiation characteristic on the top and circularly polarized characteristic.

It may be understood that in this embodiment of this application, the first feed point 100b and the second feed point 100c may be a metal shrapnel, a probe, a conductive cable, or the like. In this way, the border frame antenna 222a and the cavity antenna may be respectively fed through the metal shrapnel, the probe, the conductive cable, or the like. It should be noted that specific forming manners of the first feed point 100b and the second feed point 100c are not limited in this embodiment of this application, and are not limited to the foregoing example, provided that a feeding connection function can be implemented.

In addition, in this embodiment of this application, a quantity of the first feed points 100b corresponding to the border frame antenna 222a may be one, two, three, or more. In other words, the border frame antenna 222a may be fed through one first feed point 100b, or the border frame antenna 222a may be simultaneously fed through two first feed points 100b, or the border frame antenna 222a may be simultaneously fed through three first feed points 100b, or the border frame antenna 222a may be simultaneously fed through more first feed points 100b. This is not limited in this embodiment of this application.

Similarly, a quantity of the second feed points 100c corresponding to the cavity antenna may be one, two, three, or more. In other words, the cavity antenna may be fed through one second feed point 100c, or the cavity antenna may be simultaneously fed through two second feed points 100c, or the cavity antenna may be simultaneously fed through three second feed points 100c, or the cavity antenna may be simultaneously fed through more second feed points 100c. This is not limited in this embodiment of this application.

In addition, it may be understood that in some embodiments, positions at which the first feed point 100b and the second feed point 100c are arranged cannot interfere with each other.

It may be understood that in this embodiment of this application, a plurality of antennas in the electronic device may further be arranged. In the electronic device provided in this embodiment of this application, the antennas in the electronic device can implement coverage of more antenna modes by increasing a quantity of antennas.

In addition, it should be noted that the antenna may be a diversity antenna (Div Antenna), a Wi-Fi antenna, a Bluetooth antenna, a GPS antenna, a main antenna (Main Antenna), a medium-high frequency multiple-input multiple-output (Multiple-Input Multiple-Output, MIMO) antenna, or the like.

Specifically, in this embodiment of this application, a structural design of the conductor member 100 may include, but is not limited to, the following several possible implementation manners.

A possible implementation is as follows: (not shown in the figure) the conductor member 100 may include a first portion 110. The first portion 110 and the metal middle frame 221 are opposite to and spaced apart from each other, so that the radiation cavity 100a forms four openings 1001, and the at least one border frame antenna 222a is located on a side of at least one of the four opening 1001.

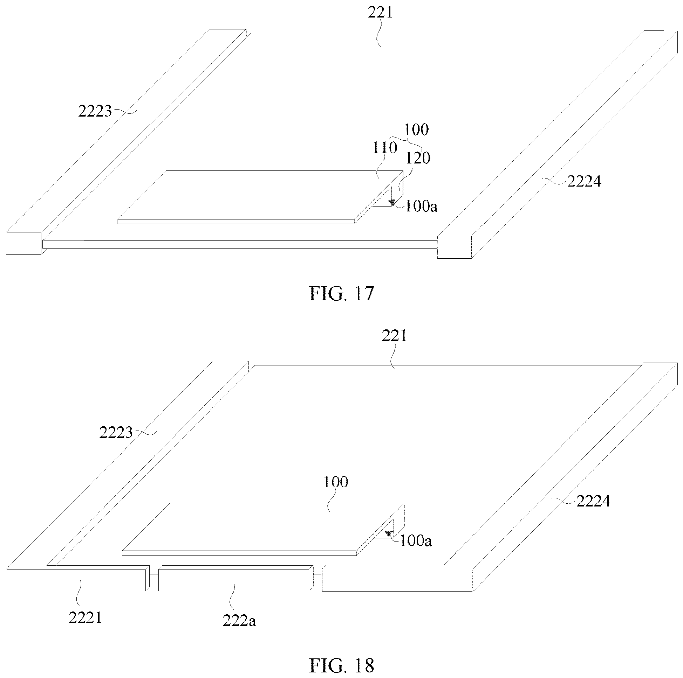

Another possible implementation is as follows: as shown in FIG. 17 and FIG. 18, the conductor member 100 may include a first portion 110 and a second portion 120. the first portion 110 is arranged opposite to the metal middle frame 221, the second portion 120 is located between the first portion 110 and the metal middle frame 221, and one end of the second portion 120 is electrically connected to the first portion 110, and an other end of the second portion 120 is electrically connected to the metal middle frame 221, so that the radiation cavity 100a forms three openings 1001, and the at least one border frame antenna 222a is located on a side of at least one of the three openings 1001.

The radiation cavity 100a forms three openings 1001, and the three openings 1001 can ensure input and output of the radiation signal, thereby satisfying a design requirement of the circularly polarized antenna.

One end of the second portion 120 close to the metal middle frame 221 may include a plurality of first ground points (not shown in the figure), and the second portion 120 is electrically connected to the metal middle frame 221 through the first ground points.

One end of the second portion 120 close to the metal middle frame 221 is designed to include a plurality of first ground points, and the second portion 120 of the conductor member 100 is electrically connected to the metal middle frame 221 through the plurality of first ground points, so that contact points for electrical connection between the second portion 120 of the conductor member 100 and the metal middle frame 221 can be added, thereby enhancing connection performance when the second portion 120 of the conductor member 100 is electrically connected to the metal middle frame 221.

Yet another possible implementation is as follows: (not shown in the figure) the conductor member 100 may include the first portion 110, the second portion 120, and a third portion 130. The first portion 110 is arranged opposite to the metal middle frame 221, and the second portion 120 and the third portion 130 may be located between the first portion 110 and the metal middle frame 221.

In addition, one end of the second portion 120 and one end of the third portion 130 are respectively electrically connected to the first portion 110, and an other end of the second portion 120 and an other end of the third portion 130 are respectively electrically connected to the metal middle frame 221. The second portion 120 and the third portion 130 are arranged adjacent or opposite to each other, so that the radiation cavity 100a forms two openings 1001. The at least one border frame antenna 222a may be located on a side of at least one of the two openings 1001.

The radiation cavity 100a forms two openings 1001, and the two openings 1001 can ensure input and output of the radiation signal, thereby satisfying a design requirement of the circularly polarized antenna.

One end of the second portion 120 close to the metal middle frame 221 may include a plurality of first ground points (not shown in the figure). The second portion 120 is electrically connected to the metal middle frame 221 through the first ground points. One end of the third portion 130 close to the metal middle frame 221 may include a plurality of second ground points (not shown in the figure). The third portion 130 is electrically connected to the metal middle frame 221 through the second ground points.

One end of the second portion 120 close to the metal middle frame 221 is designed to include a plurality of first ground points, and the second portion 120 of the conductor member 100 is electrically connected to the metal middle frame 221 through the plurality of first ground points, so that contact points for electrical connection between the second portion 120 of the conductor member 100 and the metal middle frame 221 can be added, thereby enhancing connection performance when the second portion 120 of the conductor member 100 is electrically connected to the metal middle frame 221. One end of the third portion 130 close to the metal middle frame 221 is designed to include a plurality of second ground points, and the third portion 130 of the conductor member 100 is electrically connected to the metal middle frame 221 through the plurality of second ground points, so that contact points for electrical connection between the third portion 130 of the conductor member 100 and the metal middle frame 221 can be added, thereby enhancing connection performance when the third portion 130 of the conductor member 100 is electrically connected to the metal middle frame 221.

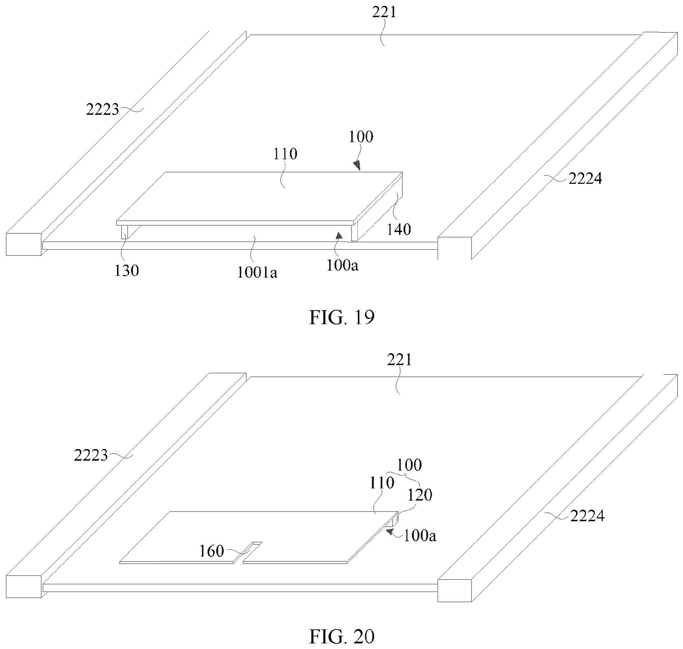

Still another possible implementation is as follows: as shown in FIG. 19, the conductor member 100 may include the first portion 110, the second portion 120, the third portion 130, and a fourth portion 140. The first portion 110 is arranged opposite to the metal middle frame 221. The second portion 120, the third portion 130, and the fourth portion 140 may be located between the first portion 110 and the metal middle frame 221.

In addition, one end of the second portion 120, one end of the third portion 130, and one end of the fourth portion 140 are respectively electrically connected to the first portion 110. An other end of the second portion 120, an other end of the third portion 130, and an other end of the fourth portion 140 are respectively electrically connected to the metal middle frame 221. The third portion 130 is respectively arranged adjacent to the second portion 120 and the fourth portion 140. The second portion 120 is arranged opposite to the fourth portion 140, so that the radiation cavity 100a forms one opening 1001. At least one border frame antenna 222a may be located on a side of the opening 1001.

The radiation cavity 100a forms one opening 1001. The opening 1001 can ensure input and output of the radiation signal, thereby helping satisfy a design requirement of the circularly polarized antenna.

One end of the second portion 120 close to the metal middle frame 221 may include a plurality of first ground points (not shown in the figure). The second portion 120 is electrically connected to the metal middle frame 221 through the first ground points. One end of the third portion 130 close to the metal middle frame 221 may include a plurality of second ground points (not shown in the figure). The third portion 130 is electrically connected to the metal middle frame 221 through the second ground point. One end of the fourth portion 140 close to the metal middle frame 221 may include a plurality of third ground points (not shown in the figure). The fourth portion 140 is electrically connected to the metal middle frame 221 through the third ground point.

One end of the second portion 120 close to the metal middle frame 221 is designed to include a plurality of first ground points, and the second portion 120 of the conductor member 100 is electrically connected to the metal middle frame 221 through the plurality of first ground points, so that contact points for electrical connection between the second portion 120 of the conductor member 100 and the metal middle frame 221 can be added, thereby enhancing connection performance when the second portion 120 of the conductor member 100 is electrically connected to the metal middle frame 221. One end of the third portion 130 close to the metal middle frame 221 is designed to include a plurality of second ground points, and the third portion 130 of the conductor member 100 is electrically connected to the metal middle frame 221 through the plurality of second ground points, so that contact points for electrical connection between the third portion 130 of the conductor member 100 and the metal middle frame 221 can be added, thereby enhancing connection performance when the third portion 130 of the conductor member 100 is electrically connected to the metal middle frame 221. One end of the fourth portion 140 close to the metal middle frame 221 is designed to include a plurality of third ground points, and the fourth portion 140 of the conductor member 100 is electrically connected to the metal middle frame 221 through the plurality of third ground points, so that contact points for electrical connection between the fourth portion 140 of the conductor member 100 and the metal middle frame 221 can be added, thereby enhancing connection performance when the fourth portion 140 of the conductor member 100 is electrically connected to the metal middle frame 221.

In other words, the cavity antenna in the circularly polarized antenna may be grounded multilaterally (referring to FIG. 19), or may be grounded unilaterally (referring to FIG. 17 and FIG. 18). In addition, the cavity antenna may be completely grounded (referring to FIG. 17 to FIG. 19), or may be multi-point grounded during grounding. This is not limited in this embodiment of this application.

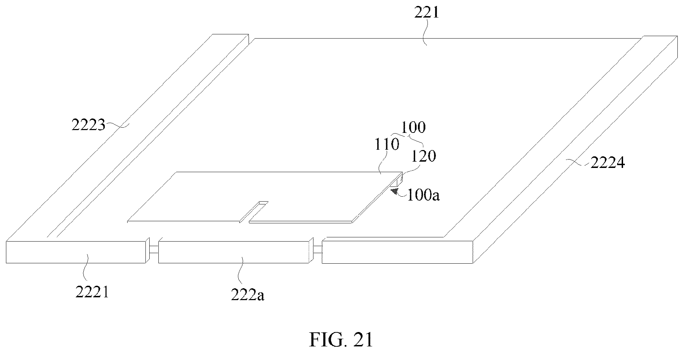

It should be noted that in this embodiment of this application, when the conductor member 100 includes the first portion 110 and the second portion 120, the first slot 160 (referring to FIG. 20 and FIG. 21) may be provided on the first portion 110, or when the conductor member 100 includes the first portion 110, the second portion 120, and the third portion 130, the first slot 160 may be provided on the first portion 110, or when the conductor member 100 includes the first portion 110, the second portion 120, the third portion 130, and the fourth portion 140, the first slot 160 may be provided on the first portion 110. This is not limited in this embodiment of this application.

In addition, in this embodiment of this application, the border frame 222 in the electronic device may include only a metal border frame, or the border frame 222 in the electronic device may include the metal border frame and a plastic border frame (not shown in the figure). The plastic border frame and the metal border frame are connected to jointly form the border frame 222, and the plastic border frame covers the metal border frame.

For example, the plastic border frame and the metal border frame may be connected through a nano molding technology (Nano Molding Technology, NMT). In the NMT, a micropore is generally made on a surface of a metal through a treatment agent, and then, plastic may enter the micropore by injection molding. Alternatively, in addition to the micropore treatment, a physical hole, for example, a through hole with a diameter of approximately 0.8 mm, may be provided on the metal, so that the plastic can extend through this hole to implement physical adhesive pulling.

Certainly, in some other embodiments, the plastic border frame and the metal border frame may alternatively be connected in another manner. This is not limited in this embodiment of this application.

In addition, a flexible circuit board antenna may be embedded in the border frame 222. Performance of the border frame antenna 222a can also be implemented in this antenna form.

It may be understood that the schematic structure in this embodiment of this application constitutes no specific limitation on the electronic device. In some other embodiments of embodiments of this application, the electronic device may include more or fewer components than those shown in the figure, or some merged components, or some split components, or different component arrangements. For example, the electronic device may further include devices such as a camera module and a flash. The components shown in the figure may be implemented by hardware, software, or a combination of software and hardware.

In the descriptions of this embodiments of this application, it should be noted that unless otherwise explicitly specified and defined, the terms "mount", "connected", and "connection" should be understood in a broad sense. For example, the connection may be a fixed connection, an indirect connection through an intermediary, internal communication inside two elements, or an interaction relationship between two elements. A person of ordinary skill in the art can understand specific meanings of the foregoing terms in embodiments of this application based on a specific situation.

The apparatus or element indicated or implied in embodiments of this application is required to have a specific orientation, and be constructed and operate in a specific orientation. Therefore, the apparatus or element should not be construed as a limitation on embodiments of this application. In the description of embodiments of this application, unless otherwise specifically limited, "a plurality of" means two or more.

The terms such as "first", "second", "third", and "fourth" (if any) in the specification and claims of embodiments of this application and in the accompanying drawings are used for distinguishing between similar objects and not necessarily used for describing any particular order or sequence. It should be understood that data used in this way is exchangeable in a proper case, so that embodiments of this application described herein can be implemented in an order different from the order shown or described herein. In addition, the terms "may include", "have", and any other variant thereof are intended to cover non-exclusive inclusions. For example, a process, method, system, product, or device that includes a list of steps or units is not necessarily limited to those steps or units that are expressly listed, but may include other steps or units that are not expressly listed or are inherent to the process, method, system, product, or device.

Finally, it should be noted that the foregoing embodiments are merely intended for describing other than limiting the technical solutions of embodiments of this application. Although embodiments of this application are described in detail with reference to the foregoing embodiments, a person of ordinary skill in the art should understand that modifications may be made to the technical solutions described in the foregoing embodiments, or equivalent replacements may be made to some or all technical features in the technical solutions, as long as such modifications or replacements do not cause the essence of corresponding technical solutions to depart from the scope of the technical solutions of embodiments of this application.

## Claims

1. An electronic device, comprising at least:
a middle frame assembly and a conductor member electrically connected to the middle frame assembly, wherein
the middle frame assembly comprises a metal middle frame and a border frame, the border frame is located on an outer periphery of the metal middle frame, and at least one border frame antenna is formed on the border frame; and
the metal middle frame and the conductor member are stacked, and a region on the metal middle frame corresponding to the conductor member and the conductor member define a radiation cavity; and
further comprising at least one feed point, wherein the at least one feed point is configured to feed the border frame antenna and the radiation cavity, and the at least one feed point excites the border frame antenna to generate a radiation current, and excites the radiation cavity to generate a radiation magnetic current, to form a circularly polarized antenna.

2. The electronic device according to claim 1, wherein the radiation cavity has at least one opening, and the at least one border frame antenna is located on a side of the radiation cavity having the opening.

3. The electronic device according to claim 2, wherein the at least one feed point comprises a first feed point and a second feed point; and
the first feed point is configured to feed the border frame antenna, and excite the border frame antenna to generate the radiation current, and the second feed point is configured to feed the radiation cavity, and excite the radiation cavity to generate the radiation magnetic current.

4. The electronic device according to claim 2, wherein a first slot is provided on the conductor member, and the first slot is in communication with the at least one opening.

5. The electronic device according to claim 4, wherein the at least one feed point comprises a second feed point and a third feed point;
the second feed point is configured to feed the radiation cavity, and excite the radiation cavity to generate a radiation magnetic current; and
the third feed point is located in the first slot, and the third feed point excites the conductor member, so that the conductor member is coupled to the border frame antenna, to form the radiation current on the border frame antenna.

6. The electronic device according to claim 2, wherein a second slot is provided on the border frame, and the second slot is provided opposite to one of the openings.

7. The electronic device according to claim 6, wherein the at least one feed point comprises a first feed point and a fourth feed point;
the first feed point is configured to feed the border frame antenna, and excite the border frame antenna to generate the radiation current; and
the fourth feed point is located in the second slot, and the fourth feed point excites the second slot, so that the second slot is coupled to the radiation cavity, to form the radiation magnetic current in the radiation cavity.

8. The electronic device according to any one of claims 2 to 7, wherein the conductor member comprises a first portion;
the first portion and the metal middle frame are opposite to and spaced apart from each other, so that the radiation cavity forms four openings; and
the at least one border frame antenna is located on a side of at least one of the four openings.

9. The electronic device according to any one of claims 2 to 7, wherein the conductor member comprises a first portion and a second portion;
the first portion is arranged opposite to the metal middle frame, and the second portion is located between the first portion and the metal middle frame;
one end of the second portion is electrically connected to the first portion, and an other end of the second portion is electrically connected to the metal middle frame, so that the radiation cavity forms three openings; and
the at least one border frame antenna is located on a side of at least one of the three openings.

10. The electronic device according to any one of claims 2 to 7, wherein the conductor member comprises a first portion, a second portion, and a third portion;
the first portion is arranged opposite to the metal middle frame, and the second portion and the third portion are located between the first portion and the metal middle frame;
one end of the second portion and one end of the third portion are respectively electrically connected to the first portion, an other end of the second portion and an other end of the third portion are respectively electrically connected to the metal middle frame, and the second portion and the third portion are arranged adjacent or opposite to each other, so that the radiation cavity forms two openings; and
the at least one border frame antenna is located on a side of at least one of the two openings.

11. The electronic device according to any one of claims 2 to 7, wherein the conductor member comprises a first portion, a second portion, a third portion, and a fourth portion;
the first portion is arranged opposite to the metal middle frame, and the second portion, the third portion, and the fourth portion are located between the first portion and the metal middle frame;
one end of the second portion, one end of the third portion, and one end of the fourth portion are respectively electrically connected to the first portion, an other end of the second portion, an other end of the third portion, and an other end of the fourth portion are respectively electrically connected to the metal middle frame, the third portion is arranged adjacent to each of the second portion and the fourth portion, and the second portion is arranged opposite to the fourth portion, so that the radiation cavity forms one of the openings; and
the at least one border frame antenna is located on a side of the opening.
